# EUROPEAN PATENT APPLICATION

(11) **EP 0 872 599 A1**
(43) Date of publication of application: **21.10.1998**
(21) Application number: 97310277.5
(22) Date of filing: 18.12.1997
(51) Int. Cl.: E03C 1/04, E03B 7/07

(54) **Water treatment and delivery apparatus**

(30) Priority: 19.04.1997 GB 9707949
(71) Applicant: Walker, David MacAlistair, Leicestershire LE12 8NB (GB)
(72) Inventor: Walker, David MacAlistair, Leicestershire LE12 8NB (GB)
(74) Representative: SERJEANTS

(57) **Abstract**

The invention provides a swan-neck delivery spout 6 for delivering water from a tap 4 to the mouth of the spout 6, in which a swivel coupling between the spout 6 and the tap 4 allows the spout 6 to be readily replaced. The spout 6 contains a packing material 7 for filtering, disinfecting or chemically treating the water. To change the water treatment material 7 when its activity is exhausted requires simple removal of the old delivery spout 6 and replacement with a new delivery spout 6 containing fresh treatment material 7.
The invention also provides a filtration unit 1 for providing filtered and deionized water to a location above a sink, comprising an under-sink filter unit 2 for filtering water from a mains supply 3 and delivering the filtered water to a dispensing tap 4, and a delivery spout 6 for delivering the filtered water from the tap 4 to the location above the sink, in which the delivery spout 6 is packed with an ion exchange resin 7 and is replaceable when the resin has exhausted its ion exchange function.

## Description

### Field of the Invention

The invention relates to apparatus for treating and delivering water from a tap or faucet. Throughout this specification the word "tap" or "faucet" is used to denote any valve for controlling the flow of water through a delivery pipe.

### Background Art

Water filters are known for use in domestic environments for providing a supply of filtered mains water through a tap or faucet that is generally provided immediately adjacent a kitchen sink. A conventional supply apparatus for such a filtered water supply would be a narrow bore swan-neck delivery pipe of internal diameter 1.0 cm or less, leading from a lever-actuated tap or faucet. The swan-neck delivery pipe would normally have one or two rubber O-ring seals at its lower end to enable it to seal with the tap or faucet while still permitting angular rotation. The entire installation would comprise a filter chamber at mains pressure beneath the kitchen sink, a mains water supply to the filter chamber and a connection between the filter chamber and the tap or faucet to pass filtered water through the swan-neck delivery pipe when the lever of the tap or faucet is actuated.

The filter chamber typically would contain a granular activated carbon filter medium which would remove from the mains water all sediment, particles and water-borne organisms. Filtration is real-time, meaning that the water flows directly from the mains supply through the filter to the tap or faucet and swan-neck delivery pipe when the tap or faucet lever is depressed. There is no intervening reservoir between the filter and the tap or faucet for the storage of a quantity of filtered water for supply when needed.

The above domestic water filtration and supply apparatus delivers good quality drinking water which is cleaner than unfiltered water. The supply is slower than that through a tap or faucet delivering unfiltered water at mains pressure, because a pressure gradient is established through the filter medium and that slows down the flow. The apparatus is used mainly to fill drinking glasses, jugs, kettles and cooking pans; so generally volumes of no more than one litre at a time are dispensed. The relatively slow delivery rate is therefore not a problem. However, it is a problem that the active carbon filter is ineffective in removing soluble ionic compounds from the water. A hard water supply, with a high content of dissolved calcium salts, cannot be converted to a soft water supply by passing it through an activated carbon filter.

It is known that hard water can be converted to soft water by removal of dissolved alkaline earth metal salts using an ion exchange resin. The resin removes the alkaline earth metal ions such as calcium ions Ca⁺⁺ and replaces them with sodium ions Na⁺. Such ion exchange resins are used in commercial water purification systems and provide good soft deionized water. The lifetime of an ion exchange resin, before it has to be recharged or replaced, is however considerably less than that of an active carbon filter. In an under-sink carbon filtration unit, the filter packing would be designed to be changed once every six months, once every year or once every three years according to the model and design of filtration unit. An ion exchange resin would need replacement every month. For that reason, no filtration unit has yet been offered for commercial sale with both a carbon filter and an ion exchange resin in the same unit. All attempts to design such a unit have followed either the design logic of attempting to extend substantially the lifetime of the ion exchange unit or attempting to provide in the under-sink filter a readily accessible and readily replaceable cartridge of ion exchange resin which can be replaced without spilling water from the filter unit, without disturbing the more permanent carbon filter and without requiring plumber's tools to open and close the filter unit housing.

There is also a need to provide other types of efficient treatment of water from a mains supply. In different circumstances the water may require disinfection to kill organisms or chemical treatment to remove contaminants such as lead or nitrates.

### The Invention

The invention provides a removable swan-neck delivery spout for a domestic mains-pressure water supply, comprising at one end a delivery nozzle and at the other end a swivel coupling incorporating at least one O-ring seal for coupling the delivery spout to a valve block of a tap or faucet in a manner that enables the spout to swivel from side to side in normal use and to be easily removable for replacement; and in the spout a packing material for filtering, disinfecting or chemically treating water as it is delivered from the tap or faucet.

By packing the water treating material into a readily replaceable swan-neck delivery spout, the invention provides an effective solution to the aforementioned problems. To change the treatment material when its activity is exhausted requires simple removal of the old delivery spout and replacement with a new delivery spout containing fresh treatment material. The old delivery spout can be disposed of or recycled. Because the swan-neck delivery spout is a self-contained unit, there is little risk of contaminating its contents during replacement and the invention accordingly allows improved hygiene.

The packing material of the swan-neck delivery spout is preferably an ion exchange resin for softening hard water. Other alternatives are a filter material such as granular activated carbon; a source of chlorine for disinfection of the water, which may be accompanied by a filter material downstream to remove chlorine from the disinfected water; or materials for removing chemical contaminants such as lead or nitrates from the water.

The swan-neck delivery spout according to the invention may be used with sources of cold, hot or boiling mains-pressure water, provided that a packing material effective at the appropriate temperature is used. For maximum effectiveness, most packing materials will require a certain contact time with the water flowing through them. Accordingly the invention may provide means, such as a constriction at the mouth of the delivery pipe, for limiting the flow of water through the spout to a rate at which the filtering, disinfecting or chemical treatment effect of the packing material is most efficient.

The delivery spout may be a simple push fit into the tap, where it is sealed by the one or more O-rings carried by the swivel coupling of the spout. Sealing contact is made with a cylindrical inner surface of an outlet bore of the valve block of the tap or faucet, so that the delivery spout can swivel about its vertical axis without affecting the seal. If desired, a screw-thread at the end of the delivery spout can engage with a cooperating thread in the outlet bore of the valve block, to retain the spout in position. The O-ring seal or seals are still utilized for sealing, but the removal of the delivery spout then requires a preliminary turn or turns to disengage the screw threads before it can be lifted out of the valve block. The delivery spout unit may be made from metal or plastic.

The swan-neck delivery spout may also if desired incorporate one or more bypass delivery passages for bypassing the packing material and allowing hot and/or cold water to be delivered from the same delivery nozzle, as untreated mains water. Such a delivery spout would be used with a valve block which typically could have three taps, faucets or other valves: the first for controlling the supply of domestic hot water through a bypass passage; the second for controlling the supply of domestic cold water through the same or a different bypass passage; and the third for controlling the supply of water through the packing material. The third such valve may be supplied by the same unfiltered cold water mains supply as the second, but is used whenever filtered or softened drinking water is required from the delivery spout.

The invention also provides a filtration unit for dispensing filtered and deionized water at a location above a sink, comprising an under-sink filter unit for filtering water from a mains supply and delivering the filtered water at mains pressure to a dispensing tap or faucet, and a swan-neck delivery spout for delivering the filtered water from the tap or faucet to the location above the sink, characterized in that the delivery spout comprises a swivel coupling incorporating at least one O-ring seal for coupling the delivery spout to a valve block of the tap or faucet in a manner that enables the spout to swivel from side to side in normal use and to be easily removable for replacement: and in the spout is a packing of an ion exchange resin, the spout being replaceable when the resin has exhausted its ion exchange function.

In a unit according to this aspect of the invention, the filter medium in the under-sink filter is preferably activated charcoal. The filter medium is preferably packed in a replaceable cartridge container, which according to size requires replacement every six months, one year or three years. In contrast, the replaceable delivery spout containing the ion exchange resin of the unit of the invention requires replacement every month, but that is no problem because the replacement operation is so quick and easy, involving simply pulling out and discarding one resin-packed delivery spout and pushing a new one into place. No under-sink work is involved, and replacement is just as simple as the regular washing down and cleaning of a sink surround.

### Drawings

Figure 1 is a schematic section through a filtration unit according to the invention;
Figures 2 and 3 are sections through two alternative swan-neck delivery spouts according to the invention; and
Figure 4 is a section through a further swan-neck delivery spout according to the invention, mounted in a valve block of a tap or faucet.

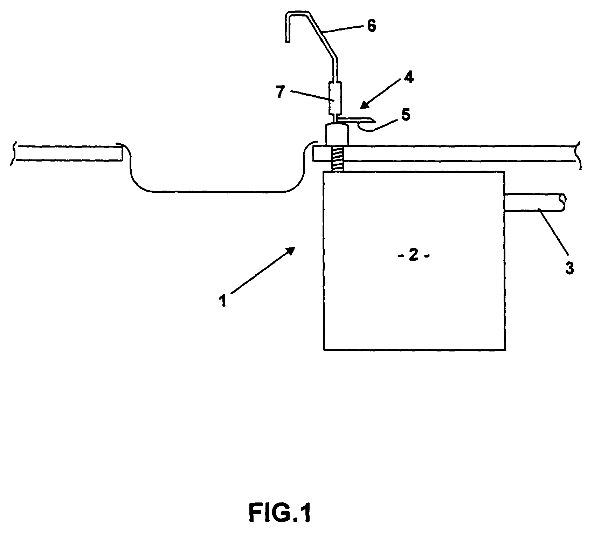

In Figure 1, a filtration unit 1 comprises an under-sink filter 2 receiving water at mains pressure from a supply 3 and delivering it directly to a tap 4. A dispensing lever 5 on the tap or faucet 4 dispenses the filtered water through a swan-neck delivery spout 6. The spout 6 has a portion 7 of enlarged diameter containing a packing of an ion exchange resin which deionizes the filtered water as it is dispensed.

Conventional swan-neck delivery spouts for under-sink filters have an internal diameter of 1.0 cm or less. The diameter of a spout containing ion-exchange resin for use in a unit according to the invention may be increased to from 1.5 cm to 2.5 cm, depending on the porosity of the ion exchange resin which it contains, so that the presence of the resin does not reduce the rate flow of water.

The filter 2 has an active carbon filter element or cartridge which requires replacement at intervals of 6 months, 12 months or 3 years. In contrast, the ion exchange resin requires replacement more frequently, for example monthly, but by packing the resin in the easily accessible and easily replaceable pipe 6, changing the pipe and resin is an extremely simple task.

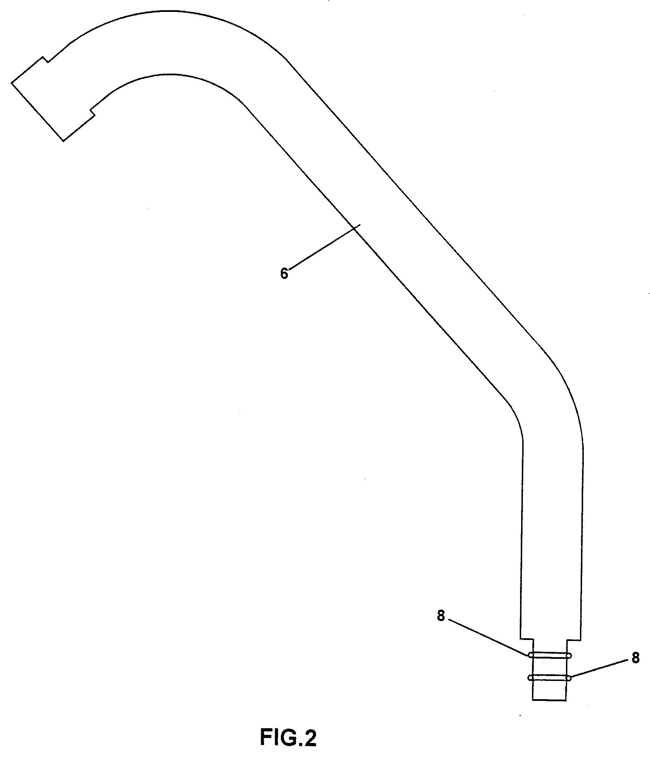

Figure 2 shows an alternative swan-neck delivery spout 6 in which the resin extends substantially the length of the spout. Figure 2 shows the sealing and anchorage means for retaining the spout in an outlet bore of the tap 4, comprising two recessed O-rings 8.

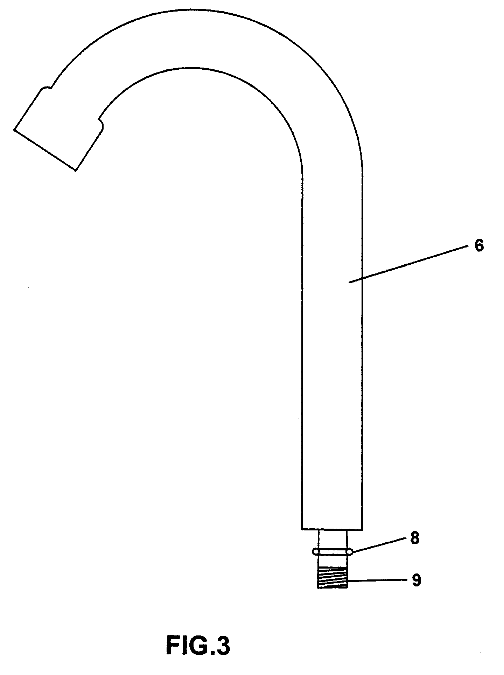

Figure 3 shows a modified sealing and anchorage means in which only one O-ring 8 is provided, but associated with a screw-thread 9 for anchoring the spout 6 to the tap 4. In practice the delivery spout 6 is not screwed down to the limit of the screw thread 9. It is screwed down part-way only so that it is freely rotatable through 360° over the sink or basin alongside which it is installed.

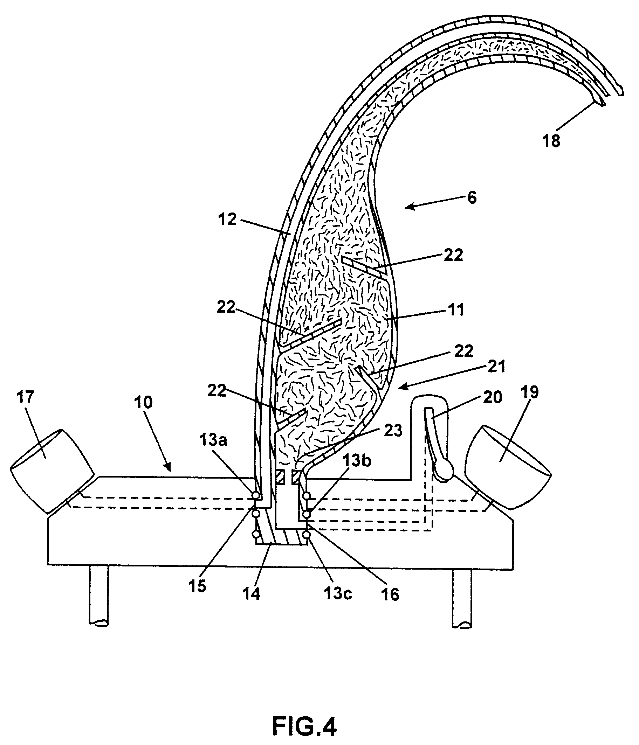

Figure 4 illustrates an alternative swan-neck delivery spout 6 inserted in a valve block 10 of a domestic kitchen tap unit. The delivery spout 6 incorporates a packed conduit 11 and a bypass conduit 12. Three O-ring seals 13a, 13b and 13c are provided around a swivel coupling portion 14 of the delivery spout 6. Between the O-ring seals 13a and 13b is a first supply chamber 15 and between the O-ring seals 13b and 13c is a second supply chamber 16. A hot tap 17 controls the supply of domestic hot water to the first supply chamber 15 from whence it is delivered through the bypass conduit 12 to a delivery nozzle 18. A cold tap 19 controls the supply of cold domestic unfiltered mains water to the first supply chamber 15 from whence it also is delivered through the bypass conduit 12 to the delivery nozzle 18. Hot and cold supplies may be delivered together by turning on both taps 17 and 19.

A faucet lever 20 controls the supply of the same cold domestic unfiltered mains water to the second supply chamber 16 from whence it passes through the packed conduit 11 to the delivery nozzle 18. If the packing in the conduit 11 is a filter medium such as active carbon, then the nozzle 18 dispenses filtered water. If the packing is an ion exchange resin then the nozzle 18 dispenses softened, deionized water. In both case, however, the water supply to the valve block is simply the usual domestic hot and cold water supplies.

Figure 4 also shows a preferred shape for the delivery spout 6, with an enlarged inlet end 21. That shape provides an attractively slim outlet end of the swan-neck, while providing more volume near the intake end for a greater volume of ion-exchange resin or filter medium as packing. Preferably baffles 22 are moulded into the spout 6 at the enlarged 9nlet end 21 within the conduit 11, for inducing turbulence in the water passing through the conduit 11, decreasing the total flow rate and increasing its duration of contact with the packing. A restricted orifice flow restrictor 23 may also optionally be incorporated into the delivery spout 6 at the swivel coupling end as shown.

The delivery spout of Figure 4 may be injection moulded in two pieces as two half-shells which are then joined together by adhesive or heat- or ultrasonic-welding.

In a further variant of the invention (not illustrated) there may be three supplies to the valve block: domestic hot and cold water and filtered water from the under-sink filter 2 of Figure 1. The packing in the conduit 11 of Figure 4 is then an ion-exchange resin, and the faucet lever 20 controls the delivery of filtered and deionized water.

## Claims

1. A swan-neck delivery spout (6) for a domestic mains-pressure water supply, comprising at one end a delivery nozzle (18) and at the other end a swivel coupling (14) incorporating at least one O-ring seal (13) for coupling the delivery spout (6) to a valve block (10) of a tap or faucet in a manner that enables the spout (6) to swivel from side to side in normal use, characterized in that the spout (6) is easily removable for replacement; and in the spout (6) is contained a packing material (11) for filtering, disinfecting or chemically treating water as it is delivered from the tap or faucet.

2. A delivery spout (6) according to claim 1, wherein the packing material (11) is an ion exchange resin.

3. A delivery spout (6) according to claim 1 or claim 2 wherein the swivel coupling (14) includes a screw-threaded portion (9) for connection to a cooperating screw thread of the valve block (10), for retaining the spout (6) in the valve block while permitting it to swivel from side to side in use.

4. A delivery spout (6) according to any preceding claim, further including means (23) for limiting the flow of water through the delivery spout (6) to a rate at which the filtering, disinfecting or chemical treatment effect of the packing material (11) is most efficient.

5. A delivery spout (6) according to claim 4, wherein the flow limiting means (23) is a constriction at the mouth of the delivery spout.

6. A delivery spout (6) according to any preceding claim, further comprising one or more bypass delivery passages (12) for bypassing the packing material (11) and allowing hot and/or cold water to be delivered from the delivery nozzle (18).

7. A delivery spout according to any preceding claim, wherein the spout has an enlarged inlet end (21) tapering to a narrower nozzle end.

8. A delivery spout according to claim 7, wherein the spout is provided with internal baffles (22) within the enlarged inlet end (21), for inducing turbulence in the water passing through the packing material (11) in the spout, and increasing the duration of contact with the packing.

9. A filtration unit for providing filtered and deionized water to a location above a sink, comprising an under-sink filter unit (2) for filtering water from a mains supply and delivering the filtered water to a dispensing tap (5), and a swan-neck delivery spout (6) according to any preceding claim for delivering the filtered water from the tap (5) to the location above the sink, characterized in that the delivery spout (6) is packed with an ion exchange resin (11) and is replaceable when the resin (11) has exhausted its ion exchange function.
